# EUROPEAN PATENT APPLICATION

(11) **EP 3 832 425 A1**
(43) Date of publication of application: **09.06.2021**
(21) Application number: 18928560.4
(22) Date of filing: 01.08.2018
(51) Int. Cl.: G05D 1/10

(54) **METHOD AND DEVICE FOR FLIGHT HEIGHT ADJUSTMENT AND FLIGHT CONTROL OF UNMANNED AERIAL VEHICLE**

(71) Applicant: Guangzhou Xaircraft Technology Co., Ltd, Tianhe District Guangzhou, Guangdong 510000 (CN)
(72) Inventor: CHEN, Yousheng, Guangzhou, Guangdong 510000 (CN)
(74) Representative: Angerhausen, Christoph
(86) International application number: PCT/CN2018/098011
(87) International publication number: WO 2020/024143

(57) **Abstract**

A method and device for flight height adjustment and flight control of an unmanned aerial vehicle. The flight height adjustment method comprises: obtaining a planned flight height of an unmanned aerial vehicle at each flight position point; and adjusting the planned flight heights at the flight position points until the difference between the adjusted flight heights at any two adjacent flight position points is less than or equal to a preset value.

## Description

### FIELD

The disclosure relates to the field of unmanned aerial vehicle technologies, and more particularly, to methods and apparatuses for adjusting a flight height and controlling a flight of an unmanned aerial vehicle.

### BACKGROUND

With the development of unmanned aerial vehicle technologies, unmanned aerial vehicle have been widely used in a variety of industries, such as the field of plant protection operations. In the related art, when unmanned aerial vehicles are used for plant protection operations, two flight modes are usually adopted, which are flight at a fixed height and flight based on terrain imitation. The flight at the fixed height refers to flying at a set altitude, and the flight based on terrain imitation refers to flying at a set distance from the ground.

Usually, the flight at the fixed height is suitable for environments with low topographic relief, such as paddy fields or plains, and the flight based on terrain imitation is suitable for environments with slight topographic relief, such as hills or terraces. However, some plants or trees with high economic value may reach a height of seven or eight meters, and some may even reach tens of meters in height. Therefore, in the related art, there is a problem that neither of the above two flight modes may adapt to plant operation areas with great plant height fluctuations.

### SUMMARY

The disclosure aims to solve at least one of the technical problems in the related art to a certain extent. To this end, a first objective of the disclosure is to provide a method for adjusting a flight height of an unmanned aerial vehicle, to plan a flight route of the unmanned aerial vehicle.

A second objective of the disclosure is to provide an apparatus for adjusting a flight height of an unmanned aerial vehicle.

A third objective of the disclosure is to provide a method for controlling a fight of an unmanned aerial vehicle.

A fourth objective of the disclosure is to provide an apparatus for controlling a fight of an unmanned aerial vehicle.

A fifth objective of the disclosure is to provide a computer device.

A sixth objective of the disclosure is to provide a non-transitory computer-readable storage medium.

A seventh objective of the disclosure is to provide a computer program product.

To achieve the above objectives, embodiments of a first aspect of the disclosure provide a method for adjusting a flight height of an unmanned aerial vehicle. The method includes: obtaining a planned flight height of each flight position point for the unmanned aerial vehicle; and adjusting the planned flight height of each flight position point until a difference between adjusted flight heights of any two adjacent flight position points is less than or equal to a preset value.

With the method for adjusting the flight height of the unmanned aerial vehicle, the planned flight height of each flight position point for the unmanned aerial vehicle is obtained. The planned flight height of each flight position point is adjusted until the difference between the adjusted flight heights of any two adjacent flight position points is less than or equal to the preset value. Consequently, with the method for adjusting the flight height of the unmanned aerial vehicle, after the planned flight height of each flight position point for the unmanned aerial vehicle is determined, the difference between the adjusted flight heights of any two adjacent flight position points may be less than or equal to the preset value through adjusting the planned flight height of each flight position point.

Further, adjusting the planned flight height of each flight position point includes: obtaining the flight position point, and obtaining an adjacent flight position point of the flight position point within a preset range; obtaining an altitude difference between the planned flight height of the flight position point and the planned flight height of the adjacent flight position point; and in response to the altitude difference being greater than a limit height of climbing or descending of the unmanned aerial vehicle, adjusting the planned flight height of the flight position point for the unmanned aerial vehicle or the planned flight height of the adjacent flight position point for the unmanned aerial vehicle.

Further, obtaining the planned flight height of each flight position point for the unmanned aerial vehicle includes: obtaining a two-dimensional route of the unmanned aerial vehicle in a target flight area and flight position points in the two-dimensional route; obtaining an altitude of an object at each flight position point in the two-dimensional route; and generating a planned three-dimensional route based on the two-dimensional route and the altitude of the object at each flight position point in the two-dimensional route, in which the planned flight height of each flight position point in the planned three-dimensional route is the altitude of the object at each flight position point.

Further, adjusting the planned flight height of the flight position point for the unmanned aerial vehicle or the planned flight height of the adjacent flight position point for the unmanned aerial vehicle includes: obtaining the planned flight height of the flight position point and the planned flight height of the adjacent flight position point for the unmanned aerial vehicle; and recognizing a flight position point with a lower planned flight height from the flight position point and the adjacent flight position point, and adjusting the planned flight height of the flight position point with the lower planned flight height.

Further, adjusting the planned flight height of the flight position point with the lower planned flight height includes: determining whether a difference between the planned flight height of the flight position point and the planned flight height of the adjacent flight position point is greater than the preset value; and in response to the difference being greater than the preset value, subtracting the preset value from the planned flight height of a flight position point with a higher planned flight height to generate an adjusting height.

Further, the adjacent flight position point of the flight position point within the preset range includes a first adjacent flight position point previous to or next to the flight position point. Adjusting the planned flight height of the flight position point includes: obtaining the flight position point, and obtaining the first adjacent flight position point previous to or next to the flight position point; obtaining a first altitude difference between the object at the flight position point and an object at the first adjacent flight position point; and in response to the first altitude difference being greater than the limit height of climbing or descending of the unmanned aerial vehicle, increasing the planned flight height of a flight position point with a lower planned flight height in the flight position point and the first adjacent flight position point.

Further, the adjacent flight position point of the flight position point within the preset range includes second adjacent flight position points previous to and next to the flight position point. Adjusting the planned flight height of the flight position point includes: obtaining the flight position point, and obtaining the second adjacent flight position points previous to and next to the flight position point; obtaining two second altitude differences between the object at the flight position point and respective objects at the second adjacent flight position points; and in response to the two second altitude differences being greater than the limit height of climbing or descending of the unmanned aerial vehicle, increasing the planned flight height of a flight position point with a lower planned flight height in the flight position point and the second adjacent flight position points.

Further, the adjacent flight position point of the flight position point within the preset range includes consecutive flight position points. Adjusting the planned flight height of the flight position point includes: obtaining flight position points consecutively, and obtaining planned flight heights of the consecutive flight position points; determining an overall regularity of the planned flight heights of the consecutive flight position points; recognizing a flight position point having a planned flight height not in conformity with the regularity from the consecutive flight position points; and increasing the planned flight height of the flight position point having the planned flight height not in conformity with the regularity.

Further, the adjacent flight position point of the flight position point within the preset range includes consecutive flight position points. Adjusting the planned flight height of the flight position point includes: obtaining flight position points consecutively, and obtaining planned flight heights of the consecutive flight position points; obtaining a third altitude difference between an object at any of the flight position points and an object at a corresponding adjacent flight position point; grouping flight position points having the third altitude difference less than a preset third altitude difference; obtaining two adjacent groups of flight position points, and determining a fourth altitude difference between a planned flight height of the last flight position point in a previous group of flight position points and a flight position height of the first flight position point in a next group of flight position points; and in response to the fourth altitude difference being greater than the limit height of climbing or descending of the unmanned aerial vehicle, adjusting the planned flight height of the previous group of flight position points or the next group of flight position points for the unmanned aerial vehicle.

Further, obtaining the planned flight height of each flight position point for the unmanned aerial vehicle includes: obtaining a two-dimensional route of the unmanned aerial vehicle in a target flight area and flight position points in the two-dimensional route; obtaining an altitude of an object at each flight position point in the two-dimensional route; and generating a planned three-dimensional route based on the two-dimensional route, the altitude of the object at each flight position point in the two-dimensional route, and a preset safe distance, in which the planned flight height of each flight position point in the planned three-dimensional route is a sum of the altitude of the object at each flight position point and the preset safe distance.

Further, adjusting the planned flight height of each flight position point includes: obtaining the flight position point, and obtaining an adjacent flight position point of the flight position point within a preset range; obtaining an altitude difference between the planned flight height of the flight position point and the planned flight height of the adjacent flight position point; and in response to the altitude difference being greater than a limit height of climbing or descending of the unmanned aerial vehicle, decreasing the planned flight height of a flight position point with a higher planned flight height in the flight position point and the adjacent flight position point, in which a decreasing height is less than the preset safe distance.

Further, the method for adjusting the flight height of the unmanned aerial vehicle also includes: in response to the planned flight height of the flight position point with the higher planned flight height in the flight position point and the adjacent flight position point being decreased to the altitude of the object at the flight position point with the higher planned flight height, determining an altitude difference between a current planned flight height of the flight position point and a current planned flight height of the adjacent flight position point; and in response to the altitude difference between the current planned flight height of the flight position point and the current planned flight height of the one adjacent flight position point being greater than the limit height of climbing or descending of the unmanned aerial vehicle, increasing the current planned flight height of a flight position point with a lower current planned flight height in the flight position point and the adjacent flight position point.

Further, obtaining the altitude of the object at the flight position point in the two-dimensional route includes: obtaining each flight position point in the two-dimensional route and a search area corresponding to each flight position point; and recognizing a maximum altitude of objects in the search area corresponding to each flight position point, and determining the maximum altitude as the altitude of each flight position point.

Further, adjusting the planned flight height of each flight position point until the difference between adjusted flight heights of any two adjacent flight position points is less than or equal to the preset value includes: determining whether the difference between the adjusted flight heights of any two adjacent flight position points is less than or equal to the preset value; and in response to the difference between the adjusted flight heights of any two adjacent flight position points being greater than the preset value, returning to the adjusting the planned flight height of each flight position point.

To achieve the above objectives, embodiments of a second aspect of the disclosure provide an apparatus for adjusting a flight height of an unmanned aerial vehicle. The apparatus includes: an obtaining module, configured to obtain a planned flight height of each flight position point for the unmanned aerial vehicle; and an adjustment module, configured to adjust the planned flight height of each flight position point until a difference between adjusted flight heights of any two adjacent flight position points is less than or equal to a preset value.

With the apparatus for adjusting the flight height of the unmanned aerial vehicle, the obtaining module is configured to obtain the planned flight height of each flight position point for the unmanned aerial vehicle. The adjustment module is configured to adjust the planned flight height of each flight position point until the difference between the adjusted flight heights of any two adjacent flight position points is less than or equal to the preset value. Consequently, with the apparatus for adjusting the flight height of the unmanned aerial vehicle, after the planned flight height of each flight position point for the unmanned aerial vehicle is determined, the difference between the adjusted flight heights of any two adjacent flight position points may be less than or equal to the preset value through adjusting the planned flight height of each flight position point.

To achieve the above objectives, embodiments of a third aspect of the disclosure provide a method for controlling a flight of an unmanned aerial vehicle. The method for controlling the flight of the unmanned aerial vehicle includes: obtaining a planned flight height of each flight position point for the unmanned aerial vehicle; adjusting the planned flight height of each flight position point until a difference between adjusted flight heights of any two adjacent flight position points is less than or equal to a preset value; and generating an adjusted three-dimensional route based on the adjusted flight heights, and controlling the unmanned aerial vehicle to fly based on the adjusted three-dimensional route.

With the method for controlling the flight of the unmanned aerial vehicle, the planned flight height of each flight position point for the unmanned aerial vehicle is obtained. The planned flight height of each flight position point is adjusted until the difference between the adjusted flight heights of any two adjacent flight position points is less than or equal to the preset value. The adjusted three-dimensional route is generated based on the adjusted flight heights, and the unmanned aerial vehicle is controlled to fly based on the adjusted three-dimensional route. Consequently, with the method for controlling the flight of the unmanned aerial vehicle, the unmanned aerial vehicle may be controlled to fly based on the adjusted three-dimensional route.

Further, controlling the unmanned aerial vehicle to fly based on the adjusted three-dimensional route includes controlling the unmanned aerial vehicle to fly at varying altitudes based on the adjusted three-dimensional route.

Further, controlling the unmanned aerial vehicle to fly at varying altitudes based on the adjusted three-dimensional route includes: controlling the unmanned aerial vehicle to fly along flight position points on the adjusted three-dimensional route; detecting a distance between a flight height of a next flight position point for the unmanned aerial vehicle and a height of an object at the next flight position point during the flight of the unmanned aerial vehicle; and in response to the distance being less than a preset minimum flight spacing distance, adjusting the flight height of the next flight position point to enable the distance to be greater than the preset minimum flight spacing distance.

Further, controlling the unmanned aerial vehicle to fly at varying altitudes based on the adjusted three-dimensional route includes: controlling the unmanned aerial vehicle to fly along flight position points on the adjusted three-dimensional route; detecting flight heights of a plurality of flight position points in the adjusted three-dimensional route the unmanned aerial vehicle is about to reach during the flight of the unmanned aerial vehicle; and adjusting a flight height of a next flight position point for the unmanned aerial vehicle based on the flight heights of the plurality of flight position points.

To achieve the above objectives, embodiments of a fourth aspect of the disclosure provide an apparatus for controlling a flight of an unmanned aerial vehicle. The apparatus for controlling the flight of the unmanned aerial vehicle includes: an obtaining module, configured to obtain a planned flight height of each flight position point for the unmanned aerial vehicle; an adjustment module, configured to adjust the planned flight height of each flight position point until a difference between adjusted flight heights of any two adjacent flight position points is less than or equal to a preset value; and a control module, configured to generate an adjusted three-dimensional route based on the adjusted flight heights, and to control the unmanned aerial vehicle to fly based on the adjusted three-dimensional route.

To achieve the above objectives, embodiments of a fifth aspect of the disclosure provide a computer device. The computer device includes a storage device, a processor, and a computer program stored in the storage device and executable by the processor. When the processor executes the program, the method for adjusting the flight height of the unmanned aerial vehicle as described above is implemented, or the method for controlling the flight of the unmanned aerial vehicle as described above is implemented.

To achieve the above objectives, embodiments of a sixth aspect of the disclosure provide a non-transitory computer-readable storage medium having a computer program stored thereon. When the program is executed by a processor, the method for adjusting the flight height of the unmanned aerial vehicle as described above is implemented, or the method for controlling the flight of the unmanned aerial vehicle as described above is implemented.

To achieve the above objectives, embodiments of a seventh aspect of the disclosure provide a computer program product. When an instruction in the computer program product is executed by a processor, the method for adjusting the flight height of the unmanned aerial vehicle as described above is implemented, or the method for controlling the flight of the unmanned aerial vehicle as described above is implemented.

Additional aspects and advantages of embodiments of disclosure will be given in part in the following descriptions, become apparent in part from the following descriptions, or be learned from the practice of embodiments of the disclosure.

### BRIEF DESCRIPTION OF THE DRAWINGS

These and other aspects and advantages of embodiments of the disclosure will become apparent and more readily appreciated from the following descriptions made with reference to the accompanying drawings.
FIG. 1 is a flowchart of a method for adjusting a flight height of an unmanned aerial vehicle according to embodiments of the disclosure.
FIG. 2 is a flowchart of a method for adjusting a flight height of an unmanned aerial vehicle according to embodiments of the disclosure.
FIG. 3 is a flowchart of a method for adjusting a flight height of an unmanned aerial vehicle according to embodiments of the disclosure.
FIG. 4 is a flowchart of a method for adjusting a flight height of an unmanned aerial vehicle according to embodiments of the disclosure.
FIG. 5 is a flowchart of a method for adjusting a flight height of an unmanned aerial vehicle according to embodiments of the disclosure.
FIG. 6 is a flowchart of a method for adjusting a flight height of an unmanned aerial vehicle according to embodiments of the disclosure.
FIG. 7 is a flowchart of a method for adjusting a flight height of an unmanned aerial vehicle according to embodiments of the disclosure.
FIG. 8 is a flowchart of a method for adjusting a flight height of an unmanned aerial vehicle according to embodiments of the disclosure.
FIG. 9 is a flowchart of a method for adjusting a flight height of an unmanned aerial vehicle according to embodiments of the disclosure.
FIG. 10 is a flowchart of a method for adjusting a flight height of an unmanned aerial vehicle according to embodiments of the disclosure.
FIG. 11 is a flowchart of a method for adjusting a flight height of an unmanned aerial vehicle according to embodiments of the disclosure.
FIG. 12 is a flowchart of a method for adjusting a flight height of an unmanned aerial vehicle according to embodiments of the disclosure.
FIG. 13 is a flowchart of a method for adjusting a flight height of an unmanned aerial vehicle according to embodiments of the disclosure.
FIG. 14 is a flowchart of a method for adjusting a flight height of an unmanned aerial vehicle according to embodiments of the disclosure.
FIG. 15 is a flowchart of a method for controlling a flight of an unmanned aerial vehicle according to embodiments of the disclosure.
FIG. 16 is a flowchart of a method for controlling a flight of an unmanned aerial vehicle according to embodiments of the disclosure.
FIG. 17 is a flowchart of a method for controlling a flight of an unmanned aerial vehicle according to embodiments of the disclosure.
FIG. 18 is a block diagram illustrating an apparatus for adjusting a flight height of an unmanned aerial vehicle according to embodiments of the disclosure.
FIG. 19 is a block diagram illustrating an apparatus for controlling a flight of an unmanned aerial vehicle according to embodiments of the disclosure.

### DETAILED DESCRIPTION

Descriptions will now be made in detail to embodiments, examples of which are illustrated in the accompanying drawings. The same or similar elements and the elements having same or similar functions are denoted by like reference numerals throughout the descriptions. Embodiments described herein with reference to the drawings are explanatory, illustrative, and used to generally understand the disclosure. Embodiments shall not be construed to limit the disclosure.

It should be noted that flight based on terrain imitation in the related art is a technical solution for flying based on an altitude of the surface. For example, the unmanned aerial vehicle may be controlled to fly based on the altitude of the surface in the map. However, when the flight based on terrain imitation is applied to plant protection operations, due to inaccurate terrain altitudes in the map and the inability to accurately identify ground vegetation and vegetation height, collisions are likely to happen during the flight of the unmanned aerial vehicle, or no crops needing plant protection operations exist in the route of the unmanned aerial vehicle. The flight based on terrain imitation mainly uses resources from, for example, Google Maps and Baidu Maps. Since speed of data updates of such resources is low, such resources cannot meet needs of plant protection operations. In addition, the flight based on terrain imitation also includes another technical solution, that is, a detection device is installed on the unmanned aerial vehicle to detect a vertical distance between the unmanned aerial vehicle and an operation area, and then the unmanned aerial vehicle is controlled to fly at a preset distance from the operation area. For example, the preset distance between the unmanned aerial vehicle and the operation area may be set to two meters. When the vertical distance between the unmanned aerial vehicle and the operation area is less than two meters, the unmanned aerial vehicle is controlled to climb to a height at which the vertical distance reaches two meters. When the vertical distance between the unmanned aerial vehicle and the operation area is greater than two meters, the unmanned aerial vehicle is controlled to descend to a height at which the vertical distance drops down to two meters. However, when this technical solution is applied to plant protection operations, in a case where spacings among plants are narrow, and the plants are high, the climbing or descending performance of the unmanned aerial vehicle may not be enough for the unmanned aerial vehicle to fly normally between plant-ground-plant. For example, when the unmanned aerial vehicle is flying between the ground and the plants, collisions are likely to happen due to the inability to climb from the ground to the top of the plant in time, or the inability to climb from the top of a lower plant to the top of a taller plant in time.

On the basis, the disclosure provides methods and apparatuses for adjusting a flight height and controlling a flight of an unmanned aerial vehicle.

The methods and apparatuses for controlling a flight of an unmanned aerial vehicle according to some embodiments of the disclosure may be described with reference to drawings as follows.

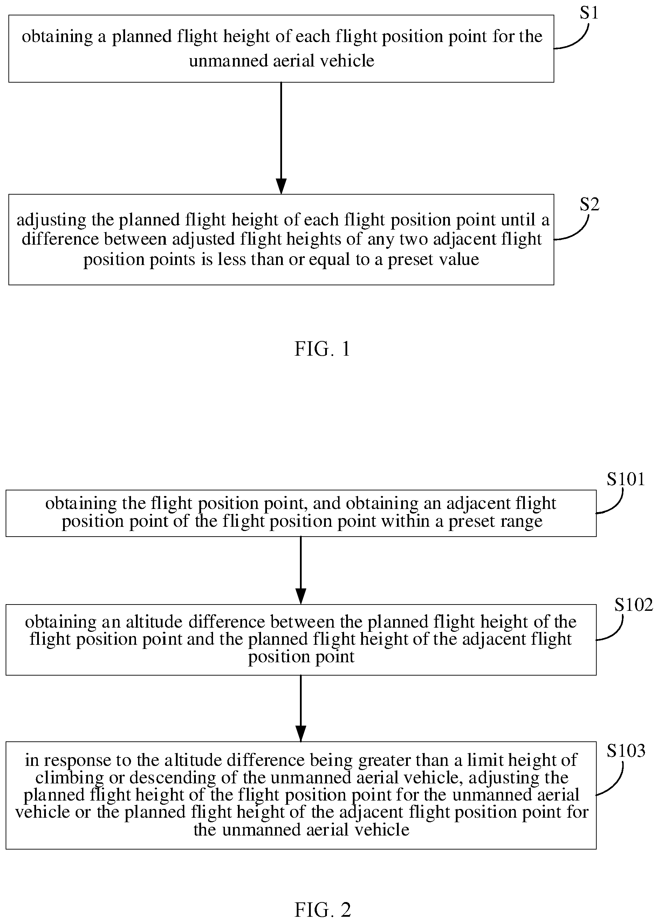

FIG. 1 is a flowchart of a method for adjusting a flight height of an unmanned aerial vehicle according to embodiments of the disclosure. As illustrated in FIG. 1, the method for adjusting the flight height of the unmanned aerial vehicle according to embodiments of the disclosure includes actions in the following blocks.

At block S1, a planned flight height of each flight position point for the unmanned aerial vehicle is obtained.

It should be noted that in embodiments of the disclosure, the planned altitude of each flight position point for the unmanned aerial vehicle may be determined by planning a three-dimensional route, or the planned flight height of each flight position point may be directly obtained through point cloud data.

Further, the planned flight height may be an initial flight height, such as an altitude of an apex of an object at the flight position point, or a set flight height, such as the altitude of the apex of the object plus a safe distance.

At block S2, the planned flight height of each flight position point is adjusted until a difference between adjusted flight heights of any two adjacent flight position points is less than or equal to a preset value.

In other words, after the planned flight height of each flight position point for the unmanned aerial vehicle is obtained, the planned flight height of each flight position point is adjusted until the difference between the adjusted flight heights of any two adjacent flight position points is less than or equal to the preset value.

As a possible implementation, as illustrated in FIG. 2, the action in block S2 may include actions in blocks S101-S103.

At block S101, the flight position point is obtained, and an adjacent flight position point of the flight position point within a preset range is obtained.

The adjacent flight position point of the flight position point within the preset range may include a flight position point previous to or next to the current flight position point, flight position points previous to and next to the current flight position point, or consecutive flight position points.

At block S102, an altitude difference between the planned flight height of the flight position point and the planned flight height of the adjacent flight position point is obtained.

It should be noted that the adjacent flight position point may include a point before the current flight position point or a point after the current flight position point. All flight position points may be expressed by longitude, latitude and height. The altitude difference between planned flight heights mainly refers to a difference between height information of adjacent flight position points. For example, if the planned flight height of a previous flight position point is three meters, and the planned flight height of a next flight position point is eight meters, then the altitude difference between the planned flight heights of the previous and next flight position points is five meters.

At block S103, in response to the altitude difference being greater than a limit height of climbing or descending of the unmanned aerial vehicle, the planned flight height of the flight position point for the unmanned aerial vehicle or the planned flight height of the adjacent flight position point for the unmanned aerial vehicle is adjusted.

In detail, after the flight position point is obtained, the adjacent flight position point of the flight position point within the preset range is obtained. The planned flight height of the flight position point or the planned flight height of the adjacent flight position point is adjusted based on the altitude difference between the planned flight height of the flight position point and the planned flight height of the adjacent flight position point, so that the adjusted flight heights of the flight position point and the adjacent flight position point may meet a limit of climbing or descending of the unmanned aerial vehicle. Consequently, it may be guaranteed that during the flight, the unmanned aerial vehicle may reach any flight position point based on the adjusted flight heights.

Therefore, with the method for adjusting the flight height of the unmanned aerial vehicle according to embodiments of the disclosure, the planned flight height of each flight position point for the unmanned aerial vehicle may be determined and adjusted, so as to ensure that the unmanned aerial vehicle may effectively fly between any two flight position points, effectively preventing flight accidents caused when the altitude difference between two adjacent flight position points exceeds the limit of climbing or descending of the unmanned aerial vehicle.

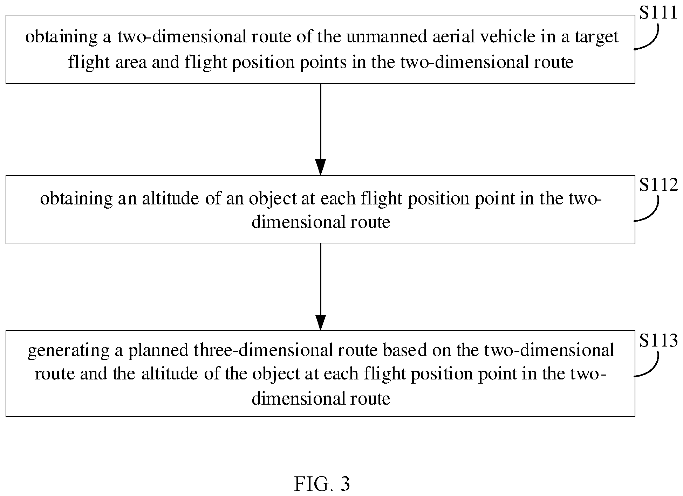

Obtaining the planned flight height of each flight position point for the unmanned aerial vehicle when the planned flight height is an altitude of an object at each flight position point, may, as illustrated in FIG. 3, include the following.

At block S111, a two-dimensional route of the unmanned aerial vehicle in a target flight area and flight position points in the two-dimensional route are obtained.

The target flight area includes an operation area, and may also include a buffer area reserved for boundaries of the operation area. The target flight area may be determined in advance, for example, the target flight area may be surveyed and mapped by means of surveying and mapping; or the target flight area may be recognized in real time, for example, the target area of farmland may be determined by image recognition.

At block S112, an altitude of an object at each flight position point in the two-dimensional route is obtained.

In detail, the two-dimensional route may be identified by latitudes and longitudes, the flight position points may be represented by latitudes and longitudes, and the value of the altitude may be obtained through a three-dimensional map such as a digital surface model (DSM) map, or through, for example, ultrasonic waves, a radar, and a visual sensor.

At block 113, a planned three-dimensional route is generated based on the two-dimensional route and the altitude of the object at each flight position point in the two-dimensional route. The planned flight height of each flight position point in the planned three-dimensional route is the altitude of the object at each flight position point.

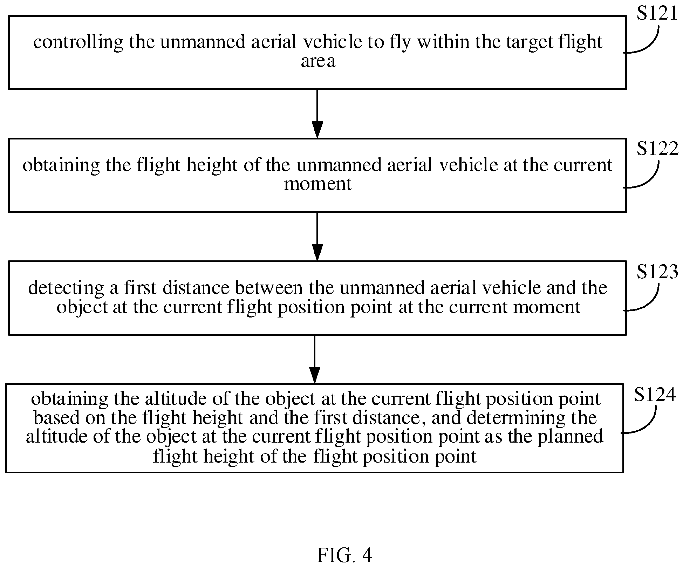

In detail, as a possible implementation, as illustrated in FIG. 4, the above action in block S112 may include actions in blocks S121-S124.

At block S121, the unmanned aerial vehicle is controlled to fly within the target flight area.

It should be noted that the flight height of the unmanned aerial vehicle in the flight area should be a relatively high altitude, for example, higher than an altitude of any object in the target flight area. For example, if the target flight area includes obstacles such as tall trees, the target flight height should be higher than the height of the tree, and the safe distance should also be included in the target flight height to ensure that the unmanned aerial vehicle will not touch the highest target object.

At block S122, the flight height of the unmanned aerial vehicle at the current moment is obtained. Those skilled in the art may understand that the method of obtaining the height may be implemented by an ultrasonic sensor or a visual sensor, or through a method pre-stored in a storage device. The method pre-stored in the storage device may obtain data of the flight height by reading the storage device.

At block S123, a first distance between the unmanned aerial vehicle at the current moment and the object at the current flight position point is detected.

It should be noted that the unmanned aerial vehicle should be equipped with a detection device to detect the first distance between the unmanned aerial vehicle at the current moment and the object at the current flight position point when the unmanned aerial vehicle is flying in the flight area. The detection device may be a lidar, a visual acquisition device, or a measuring device based on radar and other methods.

The first distance between the unmanned aerial vehicle and the object at the current flight position point may be a distance between the unmanned aerial vehicle and the top of each plant covered by a plant protection operation, or a distance between the unmanned aerial vehicle and the top of other objects, such as telegraph poles.

At block S124, the altitude of the object at the current flight position point may be obtained based on the flight height and the first distance, and the altitude of the object at the current flight position point may be determined as the planned flight height of the flight position point.

That is, before the plant protection operation is carried out, the unmanned aerial vehicle may be controlled to fly in the flight area at a relatively high altitude to obtain the flight height of the unmanned aerial vehicle at the current moment. For example, the flight height H2 of the unmanned aerial vehicle at the current moment may be obtained through a GPS (Global Position System) positioning device on the unmanned aerial vehicle. The first distance H1 between a position point of an object waiting for the plant protection operation and the unmanned aerial vehicle may be detected by a laser sensor set on the unmanned aerial vehicle. Based on the flight height H2 and the first distance HI, the altitude of the object at the current position point may be obtained as h=H2-H1. The altitude of the object at the current flight position point may be determined as the planned flight height of the flight position point.

Any recording method, such as a point cloud map or a list, may be adopted if a corresponding relationship between the flight position point and the corresponding altitude may be recorded.

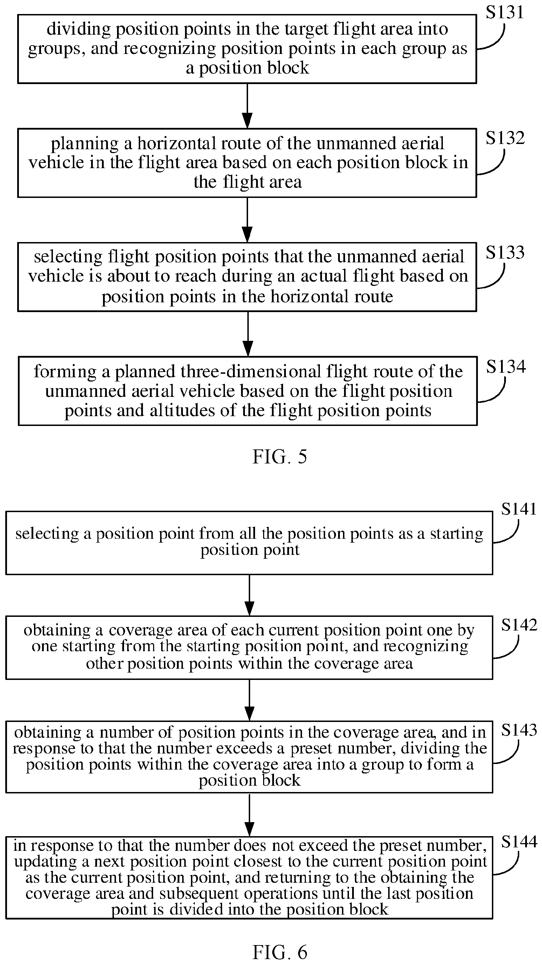

According to embodiments of the disclosure, planning the two-dimensional route based on the altitude of each flight position point in the flight area after the altitude of each flight position point in the flight area for the unmanned aerial vehicle is obtained may, as illustrated in FIG. 5, include the following.

At block S131, position points in the target flight area are grouped. Position points in each group are recognized as a position block.

The position points in the target flight area may be clustered based on position information of the position points to form position blocks.

It should be noted that the position information of each position point may include a latitude and a longitude of the position point, that is, positions in the operation area are clustered based on latitudes and longitudes.

As a possible implementation, as illustrated in FIG. 6, the action in block S131 may include the following actions in blocks S141-S144.

At block S141, a position point is selected from all the position points as a starting position point. For example, a take-off position of the unmanned aerial vehicle may be selected as the starting point. For another example, a point closest to the unmanned aerial vehicle may be selected as the starting point, or the outmost point in a series of flight position points may be selected as the starting point.

At block S142, a coverage area of each current position point is obtained one by one starting from the starting position point. Other position points within the coverage area are recognized.

It should be noted that the coverage area may be a preset size of the position block, that is, a coverage area of the size of the position block is selected with the current position point as the center, and other position points within the coverage area are recognized.

At block S143, a number of position points in the coverage area is obtained. If the number exceeds a preset number, the position points within the coverage area are included into a group to form one position block.

At block S144, if the number does not exceed the preset number, the next position point closest to the current position point is updated as the current position point, and the obtaining the coverage area and subsequent operations are returned until the last position point is included into the position block.

In other words, clustering may be performed based on the density of position points. When the number of position points within the coverage area of the position block does not reach the preset number, clustering will not be performed. When the number of position points within the coverage area of the position block reaches the preset number, clustering is performed to form a position block.

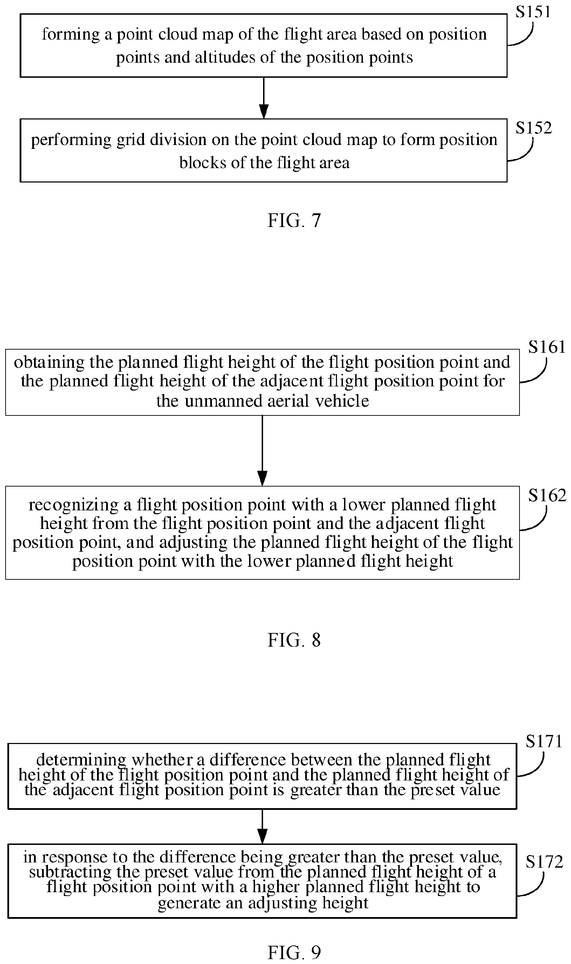

As another possible implementation, as illustrated in FIG. 7, the action in block S131 may include the actions in following blocks S151-S152.

At block S151, a point cloud map of the flight area is formed based on position points and altitudes of the position points.

At block S152, grid division is performed on the point cloud map to form position blocks of the flight area. Each grid corresponds to one position block.

In detail, the point cloud map is divided based on a grid size set in advance. The preset grid size may be 1 meter× 1 meter. Each grid corresponds to one position block.

At block S132, a horizontal route of the unmanned aerial vehicle in the flight area is planned based on each position block in the flight area.

It should be noted that planning the horizontal route of the unmanned aerial vehicle in the flight area based on each position block may be performed based on factors such as the size of each position block or types of plants, such as an S-shaped route and a concentric dual-rectangle-shaped route.

At block S133, flight position points that the unmanned aerial vehicle is about to reach during an actual flight are selected based on position points in the horizontal route.

At block S134, a planned three-dimensional flight route of the unmanned aerial vehicle is formed based on the flight position points and altitudes of the flight position points.

Therefore, with the method for adjusting the flight height according to embodiments of the disclosure, the planned three-dimensional route of the unmanned aerial vehicle in the flight area may be generated based on the altitude of each object in the flight area of the unmanned aerial vehicle. Consequently, obtaining the altitude of each object in the flight area through the flight of the unmanned aerial vehicle may effectively improve the accuracy of planning the three-dimensional route, provide data assurance for generating an adjusted three-dimensional route, and improve the flight safety of the flight of the unmanned aerial vehicle.

According to some embodiments of the disclosure, adjusting the planned flight height of each flight position point for the unmanned aerial vehicle or the planned flight height of the adjacent flight position point for the unmanned aerial vehicle when the planned flight height is the altitude of the object at the flight position point may, as illustrated in FIG. 8, include the following.

At block S161, the planned flight height of the flight position point and the planned flight height of the adjacent flight position point for the unmanned aerial vehicle are obtained.

At block S162, a flight position point with a lower planned flight height is recognized from the flight position point and the adjacent flight position point, and the planned flight height of the flight position point with the lower planned flight height is adjusted.

It should be understood that, in embodiments of the disclosure, since the planned flight height is the altitude of the object at the flight position point, if the altitude of the flight position point with a higher planned flight height is decreased, a collision is likely to happen, that is, when the altitude difference is greater than the limit height of climbing or descending of the unmanned aerial vehicle, it is necessary to adjust the flight height of the flight position point with a lower planned flight height.

In detail, as illustrated in FIG. 9, the action in block S162 may include actions in blocks S171-S172.

At block S171, it is determined whether a difference between the planned flight height of the flight position point and the planned flight height of the adjacent flight position point is greater than the preset value.

At block S 172, in response to the difference being greater than the preset value, the preset value is subtracted from the planned flight height of a flight position point with a higher planned flight height to generate an adjusting height.

It should be understood that when height differences of objects at respective position points in the flight area of the unmanned aerial vehicle differ greatly, for example, when different plants are planted alternately or the detection device collects information such as the ground as position points, it is likely that the altitude of the previous flight position point differs greatly from the altitude of the next position point. However, since the flying speed of the unmanned aerial vehicle has a limit, there may be cases where a height of climbing or descending of a great value cannot be realized within a period of flying from the previous flight position point to the next flight position point. Consequently, the flight height of a corresponding flight position point needs to be adjusted.

In other words, in order to prevent the distance between adjacent flight position points for the unmanned aerial vehicle from exceeding the limit of climbing or descending of the unmanned aerial vehicle during the flight of the unmanned aerial vehicle, it is necessary to adjust the flight height of the flight position point with the lower flight height.

That is, for each flight position point, an adjacent flight position point of the flight position point is obtained. The altitude difference between the flight position point and the adjacent flight position point of the flight position point is obtained. If an absolute value of the altitude difference is greater than the limit height of climbing or descending of the unmanned aerial vehicle, the flight height of the flight position point with the lower flight height in the flight position point and the adjacent flight position point is adjusted. Each flight position point is adjusted cyclically until the altitude difference between each flight position point and the adjacent flight position point of each position point is within the preset range.

In some embodiments of the disclosure, the adjacent flight position point of the flight position point within the preset range includes a first adjacent flight position point previous to or next to the flight position point.

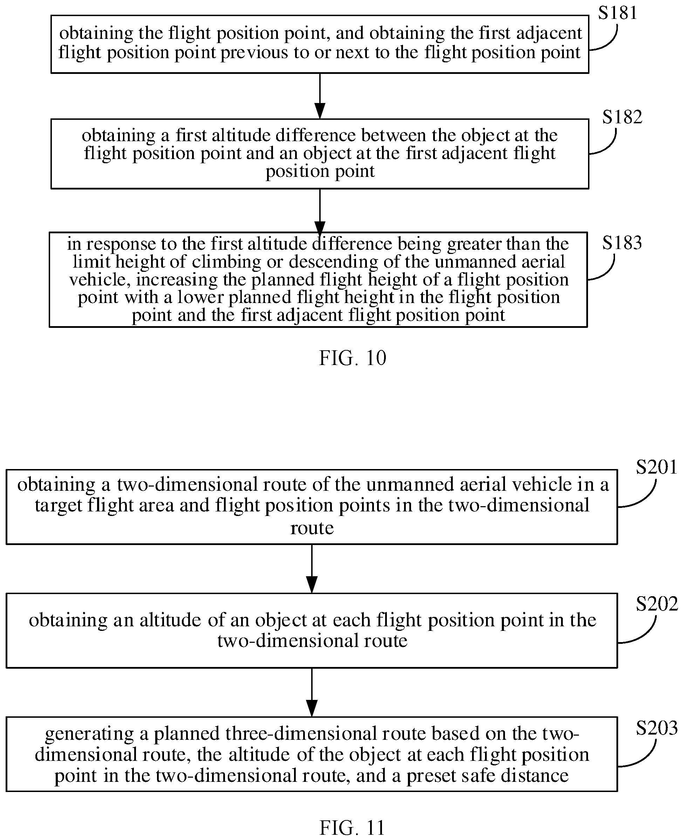

In detail, as illustrated in FIG. 10, adjusting the planned flight height of the flight position point includes the following.

At block S181, the flight position point is obtained and the first adjacent flight position point previous to or next to the flight position point is obtained.

At block S182, a first altitude difference between the object at the flight position point and an object at the first adjacent flight position point is obtained.

At block S183, in response to the first altitude difference being greater than the limit height of climbing or descending of the unmanned aerial vehicle, the planned flight height of a flight position point with a lower planned flight height in the flight position point and the first adjacent flight position point is increased.

In detail, a position point is selected as a starting position point a1. A planned flight height A1 of the starting position point and a planned flight height A2 of a next position point a2 of the starting position point are obtained. It is determined whether an absolute value of a difference between the planned flight height A1 of the starting position point a1 and the planned flight height A2 of the next position point a2 is greater than a preset threshold T. If the absolute value of the difference between the planned flight height A1 of the starting position point a1 and the planned flight height A2 of the next position point a2 is greater than the preset threshold T, that is, A1-A2>|T|, it means that the difference between the planned flight height A1 of the starting position point a1 and the planned flight height A2 of the next position point a2 exceeds the limit height of climbing or descending of the unmanned aerial vehicle. If A1-A2>T, it means that the difference between the planned flight height A1 of the starting position point a1 and the planned flight height A2 of the next position point a2 of the starting position point is relatively great, so that when the unmanned aerial vehicle flies from the starting position point a1 to the next position point a2 of the starting position point, it is impossible for the unmanned aerial vehicle to descend from the planned flight height A1 to the planned flight height A2. At this time, set A2=A1-T, that is, the lower planned flight height is increased so that when the unmanned aerial vehicle flies from the starting position point a1 to the next position point a2 of the starting position point, the unmanned aerial vehicle only needs to descend from the flight height A1 to the flight height A2. If A1-A2<-T, it means that the distance between the planned flight height A1 of the starting position point a1 and the planned flight height A2 of the next position point a2 of the starting position point is relatively great, so that when the unmanned aerial vehicle flies from the starting position point a1 to the next position point a2 of the starting position point, the unmanned aerial vehicle cannot rise from the flight height A1 to the flight height A2. At this time, set A1=A2-T, that is, the lower altitude is increased so that when the unmanned aerial vehicle flies from the starting position point a1 to the next position point a2 of the starting position point, the unmanned aerial vehicle only needs to rise from the flight height A1 to the flight height A2. If -T<A1-A2<T, it means the altitude difference between the planned flight height A1 of the starting position point a1 and the planned flight height A2 of the next position point a2 of the starting position point is suitable for the unmanned aerial vehicle to fly from the starting position point a1 to the next position point a2 of the starting position point. The above process is repeated on and on until the altitude difference between each flight position point and the adjacent flight position point of each flight position point is within the preset range.

For example, suppose there are four position points on the route, namely a1, a2, a3, and a4, flight heights corresponding to the four position points are A1=25, A2=10, A3=18 and A4=40, and the preset threshold T=5. In other words, the planned flight height of the planned three-dimensional route is 25, 10, 18, 40, and the adjusted flight heights after a first adjustment, obtained by adjusting the flight heights in a sequence started with a first position point and ended with a fourth position point of the unmanned aerial vehicle, are 25, 20, 35, and 40 in sequence. Consequently, since the difference between a flight height A1 of a first position point a1 and a flight height A2 of a second position point a2 is greater than the preset threshold T, the flight height A2 of the second position point a2 is increased to a value obtained after subtracting the preset threshold T from the flight height A1 of the first position point a1. Similarly, when the difference between a flight height A3 of a third position point a3 and a flight height A4 of a fourth position point a4 is greater than the preset threshold T, the flight height A3 of the third position a3 is adjusted to a value obtained after subtracting the preset threshold T from the flight height A4 of the fourth position a4.

If a difference between the adjusted flight height A2 of the second position point a2 and the adjusted flight height A3 of the third position point a3 is still greater than the preset threshold, a second adjustment of flight heights is performed, and thus the adjusted flight heights of the unmanned aerial vehicle after the second adjustment of flight heights are 25, 30, 35, and 40. At this point, a difference between flight heights of every two adjacent position points in the four position points is not greater than the preset threshold T. consequently, the flight heights at this moment may be set as the adjusted flight heights of the flight position points in the adjusted three-dimensional flight route of the unmanned aerial vehicle.

It should be understood that when adjusting the flight height of each flight position point, it is generally selected to increase the lower altitude instead of reducing the higher flight height, for the reason that the flight position point with a lower flight height may correspond to the ground or a plant with a lower height, but the flight position point with a higher flight height must be an altitude of a higher plant. If the higher flight height for the unmanned aerial vehicle is reduced to a lower flight height, the flight safety of the unmanned aerial vehicle may be affected as the unmanned aerial vehicle may collide with the higher plant, and also, it is impossible to carry out plant protection operations on the taller plant. Of course, when the flight height is relatively far away from the top of the plant, the higher flight height may be reduced by the preset distance. However, it should be guaranteed that the unmanned aerial vehicle at the adjusted flight height will not touch the top of the plant. Consequently, it should be guaranteed that the distance between the adjusted flight height and the top of the plant should not be less than the safe distance, and the higher flight height cannot be adjusted at will.

According to some embodiments of the disclosure, the preset threshold T may also be set based on a horizontal flight speed and a maximum vertical speed of the unmanned aerial vehicle. In detail, the preset threshold T is not greater than a product of a quotient of a distance D between two adjacent target position points and a horizontal flight speed VI, and a maximum vertical speed V2, that is, T≤D/V1×V2.

According to some embodiments of the disclosure, the adjacent flight position point of the flight position point within the preset range includes second adjacent flight position points previous to and next to the flight position point.

In detail, adjusting the planned flight height of the flight position point includes: obtaining the flight position point, and obtaining the second adjacent flight position points previous to and next to the flight position point; obtaining two second altitude differences between the object at the flight position point and respective objects at the second adjacent flight position points; and in response to the two second altitude differences being greater than the limit height of climbing or descending of the unmanned aerial vehicle, increasing the planned flight height of a flight position point with a lower planned flight height in the flight position point and the second adjacent flight position points.

In other words, three flight position points may be selected at one time, and a comparison may be performed on the planned flight heights of the three flight position points. When the planned flight height of the middle flight position point among the three flight position points is lower than the flight height of the flight position point previous to the middle flight position point and the flight height of the flight position point next to the middle flight position point, and when the altitude difference between the flight height of the flight position point previous to the middle flight position point and the flight height of the middle flight position point or the altitude difference between the flight height of the flight position point next to the middle flight position point and the flight height of the middle flight position point exceeds the height limit of climbing or descending of the unmanned aerial vehicle, the flight height of the middle flight position point may be increased. The process for adjustment may be referred to the above embodiments, and will not be repeated here.

According to some embodiments of the disclosure, the adjacent flight position point of the flight position point within the preset range includes consecutive flight position points.

In detail, adjusting the planned flight height of the flight position point includes: obtaining flight position points consecutively, and obtaining planned flight heights of the consecutive flight position points; determining an overall regularity of the planned flight heights of the consecutive flight position points; recognizing a flight position point having a planned flight height not in conformity with the regularity from the consecutive flight position points; and increasing the planned flight height of the flight position point having the planned flight height not in conformity with the regularity.

In other words, when the planned flight heights of the flight position points are obtained consecutively, in a case where the planned flight heights of the consecutive flight position points present an overall law, for example, in a case where the unmanned aerial vehicle goes uphill or downhill, if the planned flight heights of one or more flight position points in the planned flight heights of the consecutive flight position points are lower than the planned flight heights that the one or more flight position points should have based on the overall law, the planned flight heights of the one or more flight position points may be adjusted. The process for adjustment may be referred to the above embodiments, and will not be repeated here.

According some embodiments of the disclosure, the adjacent flight position point of the flight position point within the preset range includes consecutive flight position points.

In detail, adjusting the planned flight height of the flight position point includes: obtaining flight position points consecutively, and obtaining planned flight heights of the consecutive flight position points; obtaining a third altitude difference between an object at any of the flight position points and an object at a corresponding adjacent flight position point; grouping flight position points having the third altitude difference less than a preset third altitude difference; obtaining two adjacent groups of flight position points, and determining a fourth altitude difference between a planned flight height of the last flight position point in a previous group of flight position points and a flight position height of the first flight position point in a next group of flight position points; and in response to the fourth altitude difference being greater than the limit height of climbing or descending of the unmanned aerial vehicle, adjusting the planned flight height of the previous group of flight position points or the next group of flight position points for the unmanned aerial vehicle.

In other words, when the planned flight heights of the flight position points are obtained consecutively, in a case where the planned flight heights of the consecutive flight position points present an overall law, for example, in a case where the unmanned aerial vehicle goes uphill or downhill, there may be a difference in a mild slope and a steep slope for the uphill (or downhill) landform. Therefore, when it is recognized that the altitude difference between the planned flight heights of two adjacent flight position points at a junction of the mild slope and the steep slope exceeds the limit height of climbing or descending of the unmanned aerial vehicle, the planned flight heights of flight position points in an area of the mild slope need to be increased. The process for adjustment may be referred to the above embodiments, and will not be repeated here.

Obtaining the planned flight height of each flight position point for the unmanned aerial vehicle when the planned flight height is a sum of the altitude of the object at each flight position point and the preset safe distance may, as illustrated in FIG. 11, include the following.

At block S201, a two-dimensional route of the unmanned aerial vehicle in a target flight area and flight position points in the two-dimensional route are obtained.

At block S202, an altitude of an object at each flight position point in the two-dimensional route is obtained.

At block S203, a planned three-dimensional route is generated based on the two-dimensional route, the altitude of the object at each flight position point in the two-dimensional route, and a preset safe distance. The planned flight height of each flight position point in the planned three-dimensional route is a sum of the altitude of the object at each flight position point and the preset safe distance.

It should be understood that the process of embodiments of the disclosure is basically the same as the above process described when the planned flight height is the altitude of the object at the flight position point. The difference is that the planned flight height of each flight position point in the planned three-dimensional route is the sum of the altitude of the object at each flight position point and the preset safe distance.

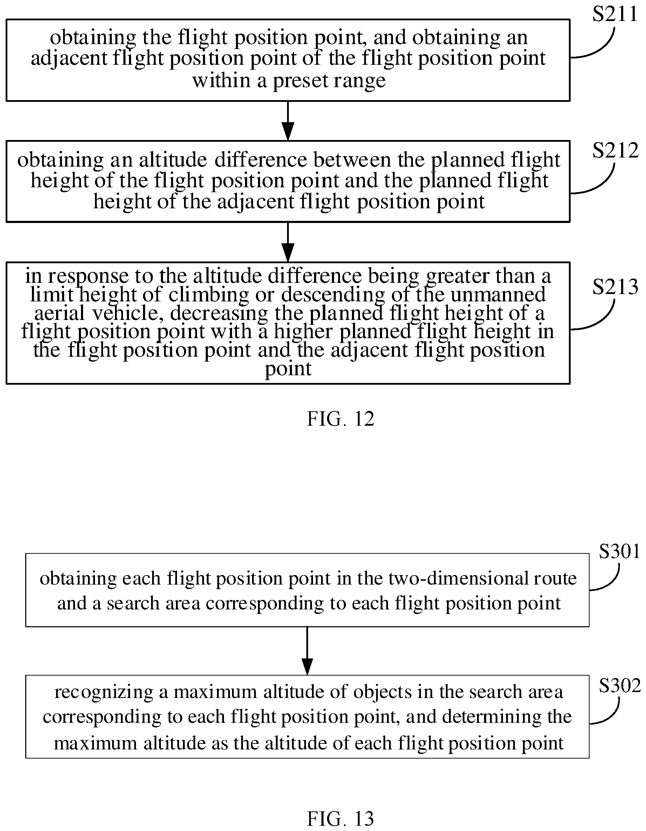

Further, adjusting the planned flight height of each flight position point may include, as illustrated in FIG. 12, the following.

At block S211, the flight position point is obtained, and an adjacent flight position point of the flight position point within a preset range is obtained.

At block S212, an altitude difference between the planned flight height of the flight position point and the planned flight height of the adjacent flight position point is obtained.

At block S213, in response to the altitude difference being greater than a limit height of climbing or descending of the unmanned aerial vehicle, the planned flight height of a flight position point with a higher planned flight height in the flight position point and the adjacent flight position point is decreased. A decreasing height is less than the preset safe distance.

In other words, when the planned flight height of each flight position point is a sum of the altitude of the object at each flight position point and the preset safe distance, if the altitude difference of two adjacent planned flight heights exceeds the limit height of climbing or descending of the unmanned aerial vehicle, the planned flight height of the flight position point with the higher planned flight height in the flight position point and the adjacent flight position point may be decreased. However, the planned flight height of the flight position point with the higher planned flight height may only be decreased to the altitude of the object at the flight position point with the higher planned flight height, that is, decreased by the preset safe distance in the planned flight height. The flight position point with the higher planned flight height may be decreased if it may be guaranteed that the top of the plant will not be touched. Therefore, in order to ensure that the distance between the adjusted flight height and the height of the top of the plant cannot be less than the safe distance, the flight position point with the higher planned flight height cannot be adjusted at will.

Further, in response to the planned flight height of the flight position point with the higher planned flight height in the flight position point and the adjacent flight position point being decreased to the altitude of the object at the flight position point with the higher planned flight height, an altitude difference between a current planned flight height of the flight position point and a current planned flight height of the adjacent flight position point is determined. In response to the altitude difference between the current planned flight height of the flight position point and the current planned flight height of the one adjacent flight position point being greater than the limit height of climbing or descending of the unmanned aerial vehicle, the current planned flight height of a flight position point with a lower current planned flight height in the flight position point and the adjacent flight position point is increased.

In other words, after the planned flight height of the flight position point with the higher planned flight height in the flight position point and the adjacent flight position point is decreased to the altitude of the object at the flight position point with the higher planned flight height, if the altitude difference between the planned flight heights of two adjacent flight position points still exceeds the limit height of climbing or descending of the unmanned aerial vehicle, the flight height of the flight position point with the lower planned flight height needs to be adjusted based on the manner of increasing the planned flight height of the flight position point with the lower planned flight height described above. The adjustment will not be repeated here.

Based on the above two different planned flight heights, the method for adjusting the flight height of the unmanned aerial vehicle according to embodiments of the disclosure may, as illustrated in FIG. 13, include the following.

At block S301, each flight position point in the two-dimensional route and a search area corresponding to each flight position point are obtained.

It should be noted that the search area may be an area larger than an area of a body of unmanned aerial vehicle plus an area corresponding to the safe distance, that is, an area slightly larger than the body of the unmanned aerial vehicle on the horizontal route may be obtained for each position point, and the area slightly larger than the body of the unmanned aerial vehicle may be determined as the search area.

At block S302, a maximum altitude of objects in the search area corresponding to each flight position point is recognized, and the maximum altitude is determined as the altitude of each flight position point.

In detail, an altitude of the search area of each position point on the horizontal route is obtained. And then, one position point is selected, and the altitude of the selected position point is compared with the altitude of a position point adjacent to the selected position point. The position point with a higher altitude in the selected position point and the position point adjacent to the selected position point is selected for a comparison with the altitude of a next position point. The above process is repeated on and on until all position points in the search area are traversed to obtain a position point with the maximum altitude in the search area. The maximum altitude is determined as the altitude of each flight position point.

It should be understood that the size of the search area should be set to ensure an effective area of plant protection operations for the unmanned aerial vehicle and an area that prevents the unmanned aerial vehicle from colliding with other unmanned aerial vehicles, that is, by setting the search area to an area of the body of the unmanned aerial vehicle plus the area corresponding to the safe distance, the area of the body of the unmanned aerial vehicle may ensure the effective completion of plant protection operations, and the safe distance may create a distance from other working unmanned aerial vehicles, thereby preventing flight accidents. By taking the maximum altitude in the search area as the altitude of each flight position point, the flight height of the unmanned aerial vehicle during plant protection operations may be guaranteed to be higher than any point in the search area, preventing the unmanned aerial vehicle from colliding with plants.

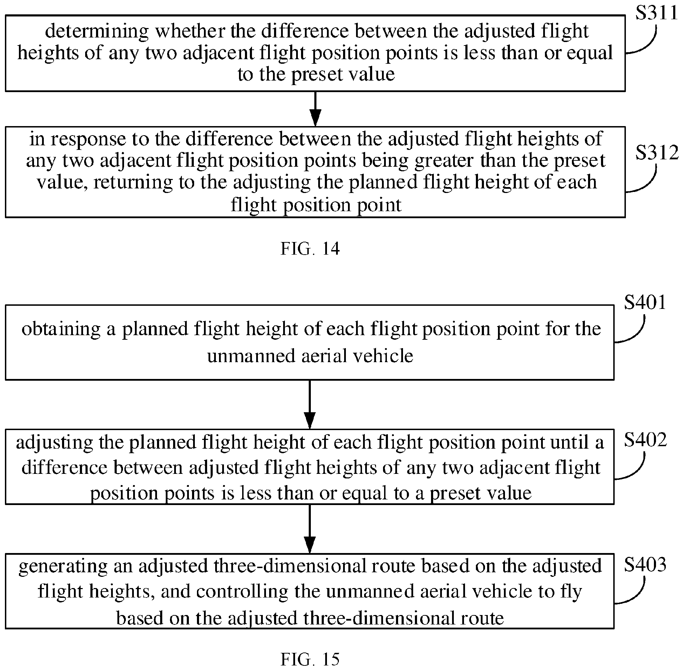

Further, the method for adjusting the flight height of the unmanned aerial vehicle may, as illustrated in FIG. 14, include the following.

At block S311, it is determined whether the difference between the adjusted flight heights of any two adjacent flight position points is less than or equal to the preset value.

At block S312, in response to the difference between the adjusted flight heights of any two adjacent flight position points being greater than the preset value, it is returned to the adjusting the planned flight height of each flight position point.

In summary, with the method for adjusting the flight height of the unmanned aerial vehicle according to embodiments of the disclosure, the planned flight height of each flight position point for the unmanned aerial vehicle is obtained. The planned flight height of each flight position point is adjusted until the difference between the adjusted flight heights of any two adjacent flight position points is less than or equal to the preset value. Consequently, with the method for adjusting the flight height of the unmanned aerial vehicle, after the planned flight height of each flight position point for the unmanned aerial vehicle is determined, the difference between the adjusted flight heights of any two adjacent flight position points may be less than or equal to the preset value through adjusting the planned flight height of each flight position point.

FIG. 15 is a flowchart of a method for controlling a flight of an unmanned aerial vehicle according to embodiments of the disclosure. As illustrated in FIG. 15, the method for controlling the flight of the unmanned aerial vehicle according to embodiments of the disclosure includes the following.

At block S401, a planned flight height of each flight position point for the unmanned aerial vehicle is obtained.

At block S402, the planned flight height of each flight position point is adjusted until a difference between adjusted flight heights of any two adjacent flight position points is less than or equal to a preset value.

At block S403, an adjusted three-dimensional route is generated based on the adjusted flight heights. The unmanned aerial vehicle is controlled to fly based on the adjusted three-dimensional route.

The unmanned aerial vehicle is controlled to fly at varying altitudes based on the adjusted three-dimensional route.

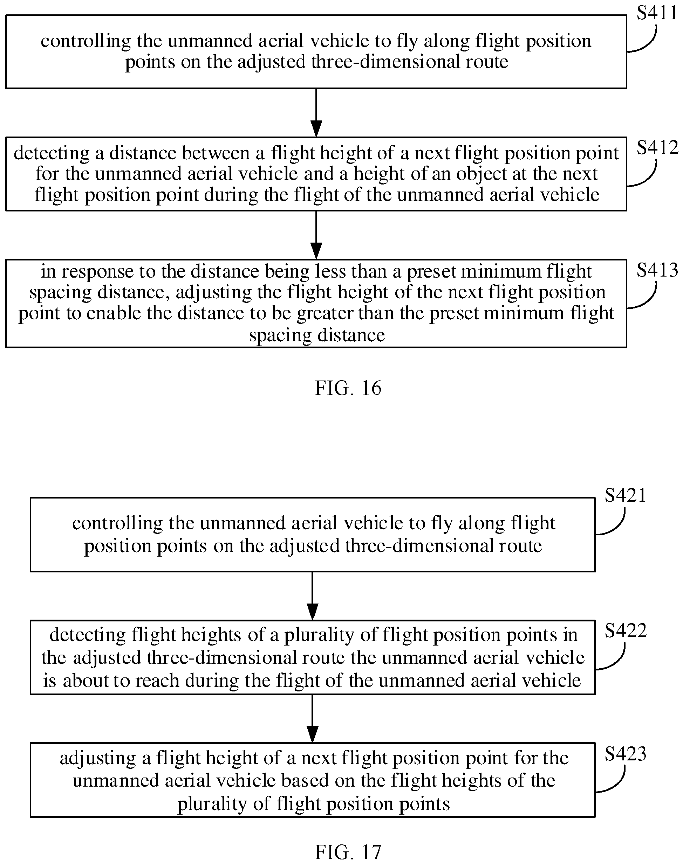

In detail, controlling the unmanned aerial vehicle to fly at varying altitudes based on the adjusted three-dimensional route may, as illustrated in FIG. 16, include the following.

At block S411, the unmanned aerial vehicle is controlled to fly along flight position points on the adjusted three-dimensional route.

At block S412, a distance between a flight height of a next flight position point for the unmanned aerial vehicle and a height of an object at the next flight position point may be detected during the flight of the unmanned aerial vehicle.

At block S413, in response to the distance being less than a preset minimum flight spacing distance, the flight height of the next flight position point is adjusted to enable the distance to be greater than the preset minimum flight spacing distance.

As a result, it may be ensured that the unmanned aerial vehicle maintains a certain flight distance from the adjusted three-dimensional route, which is convenient for the unmanned aerial vehicle to perform plant protection operations. Moreover, the method may also prevent the problem that the altitude of the unmanned aerial vehicle may affect the safe flight of the unmanned aerial vehicle due to an error generated in the aforementioned detection process or the altitude adjustment, such that the flight safety of the unmanned aerial vehicle may be effectively improved.

In detail, controlling the unmanned aerial vehicle to fly at varying altitudes based on the adjusted three-dimensional route may, as illustrated in FIG. 17, include the following.

At block S421, the unmanned aerial vehicle is controlled to fly along flight position points on the adjusted three-dimensional route.

At block S422, flight heights of a plurality of flight position points in the adjusted three-dimensional route the unmanned aerial vehicle is about to reach are detected during the flight of the unmanned aerial vehicle.

At block S423, a flight height of a next flight position point for the unmanned aerial vehicle is adjusted based on the flight heights of the plurality of flight position points.

In summary, with the apparatus for adjusting the flight height of the unmanned aerial vehicle, the planned flight height of each flight position point for the unmanned aerial vehicle may be obtained by the obtaining module. The planned flight height of each flight position point may be adjusted by the adjustment module until the difference between the adjusted flight heights of any two adjacent flight position points is less than or equal to the preset value. Consequently, with the method for adjusting the flight height of the unmanned aerial vehicle, after the planned flight height of each flight position point for the unmanned aerial vehicle is determined, the difference between the adjusted flight heights of any two adjacent flight position points may be less than or equal to the preset value through adjusting the planned flight height of each flight position point.

To implement the above embodiments, the disclosure also provides an apparatus for adjusting a flight height of an unmanned aerial vehicle.

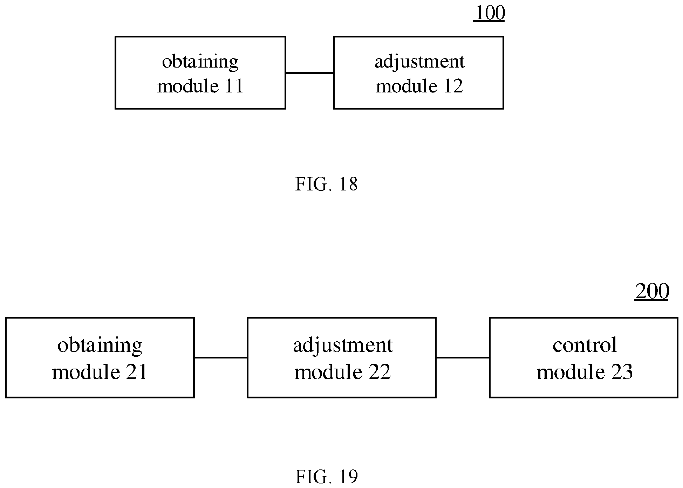

FIG. 18 is a block diagram illustrating an apparatus for adjusting a flight height of an unmanned aerial vehicle according to embodiments of the disclosure.

As illustrated in FIG. 18, an apparatus 100 for adjusting a flight height of an unmanned aerial vehicle includes an obtaining module 11 and an adjustment module 12.

The obtaining module 10 is configured to obtain a planned flight height of each flight position point for the unmanned aerial vehicle. The adjustment module 20 is configured to adjust the planned flight height of each flight position point until a difference between adjusted flight heights of any two adjacent flight position points is less than or equal to a preset value.

Further, the adjustment module 20 is configured to: obtain the flight position point, and obtain an adjacent flight position point of the flight position point within a preset range; obtain an altitude difference between the planned flight height of the flight position point and the planned flight height of the adjacent flight position point; and in response to the altitude difference being greater than a limit height of climbing or descending of the unmanned aerial vehicle, adjust the planned flight height of the flight position point for the unmanned aerial vehicle or the planned flight height of the adjacent flight position point for the unmanned aerial vehicle.

Further, the obtaining module 10 is configured to: obtain a two-dimensional route of the unmanned aerial vehicle in a target flight area and flight position points in the two-dimensional route; obtain an altitude of an object at each flight position point in the two-dimensional route; and generate a planned three-dimensional route based on the two-dimensional route and the altitude of the object at each flight position point in the two-dimensional route. The planned flight height of each flight position point in the planned three-dimensional route is the altitude of the object at each flight position point.

Further, the adjustment module 20 is configured to: obtain the planned flight height of the flight position point and the planned flight height of the adjacent flight position point for the unmanned aerial vehicle; and recognize a flight position point with a lower planned flight height from the flight position point and the adjacent flight position point, and adjust the planned flight height of the flight position point with the lower planned flight height.

Further, the adjustment module 20 is configured to: determine whether a difference between the planned flight height of the flight position point and the planned flight height of the adjacent flight position point is greater than the preset value; in response to the difference being greater than the preset value, subtract the preset value from the planned flight height of a flight position point with a higher planned flight height to generate an adjusting height; and update the planned flight height of a flight position point with a lower planned flight height based on the adjusting height.

Further, the adjacent flight position point of the flight position point within the preset range includes a first adjacent flight position point previous to or next to the flight position point. The adjustment module 20 is further configured to: obtain the flight position point, and obtain the first adjacent flight position point previous to or next to the flight position point; obtain a first altitude difference between the object at the flight position point and an object at the first adjacent flight position point; and in response to the first altitude difference being greater than the limit height of climbing or descending of the unmanned aerial vehicle, increase the planned flight height of a flight position point with a lower planned flight height in the flight position point and the first adjacent flight position point.

The adjacent flight position point of the flight position point within the preset range includes second adjacent flight position points previous to and next to the flight position point. The adjustment module 20 is further configured to: obtain the flight position point, and obtain the second adjacent flight position points previous to and next to the flight position point; obtain two second altitude differences between the obj ect at the flight position point and respective obj ects at the second adjacent flight position points; and in response to the two second altitude differences being greater than the limit height of climbing or descending of the unmanned aerial vehicle, increase the planned flight height of a flight position point with a lower planned flight height in the flight position point and the second adjacent flight position points.

The adjacent flight position point of the flight position point within the preset range includes consecutive flight position points. The adjustment module 20 is further configured to: obtain flight position points consecutively, and obtain planned flight heights of the consecutive flight position points; determine an overall regularity of the planned flight heights of the consecutive flight position points; recognize a flight position point having a planned flight height not in conformity with the regularity from the consecutive flight position points; and increase the planned flight height of the flight position point having the planned flight height not in conformity with the regularity.

Further, the adjacent flight position point of the flight position point within the preset range includes consecutive flight position points. The adjustment module 20 is configured to: obtain flight position points consecutively, and obtain planned flight heights of the consecutive flight position points; obtain a third altitude difference between an object at any of the flight position points and an object at a corresponding adjacent flight position point; group flight position points having the third altitude difference less than a preset third altitude difference; obtain two adjacent groups of flight position points, and determine a fourth altitude difference between a planned flight height of the last flight position point in a previous group of flight position points and a flight position height of the first flight position point in a next group of flight position points; and in response to the fourth altitude difference being greater than the limit height of climbing or descending of the unmanned aerial vehicle, adjust the planned flight height of the previous group of flight position points or the next group of flight position points for the unmanned aerial vehicle.

Further, the adjustment module 20 is configured to: obtain a two-dimensional route of the unmanned aerial vehicle in a target flight area and flight position points in the two-dimensional route; obtain an altitude of an object at each flight position point in the two-dimensional route; and generate a planned three-dimensional route based on the two-dimensional route, the altitude of the object at each flight position point in the two-dimensional route, and a preset safe distance. The planned flight height of each flight position point in the planned three-dimensional route is a sum of the altitude of the object at each flight position point and the preset safe distance.

Further, the adjustment module 20 is configured to: obtain the flight position point, and obtain an adjacent flight position point of the flight position point within a preset range; obtain an altitude difference between the planned flight height of the flight position point and the planned flight height of the adjacent flight position point; and in response to the altitude difference being greater than a limit height of climbing or descending of the unmanned aerial vehicle, decrease the planned flight height of a flight position point with a higher planned flight height in the flight position point and the adjacent flight position point. A decreasing height is less than the preset safe distance.

Further, the adjustment module 20 is configured to: in response to the planned flight height of the flight position point with the higher planned flight height in the flight position point and the adjacent flight position point being decreased to the altitude of the object at the flight position point with the higher planned flight height, determine an altitude difference between a current planned flight height of the flight position point and a current planned flight height of the adjacent flight position point; and in response to the altitude difference between the current planned flight height of the flight position point and the current planned flight height of the one adjacent flight position point being greater than the limit height of climbing or descending of the unmanned aerial vehicle, increase the current planned flight height of a flight position point with a lower current planned flight height in the flight position point and the adjacent flight position point.

Further, the adjustment module 20 is configured to: obtain each flight position point in the two-dimensional route and a search area corresponding to each flight position point; and recognize a maximum altitude of objects in the search area corresponding to each flight position point, and determine the maximum altitude as the altitude of each flight position point.

Further, the adjustment module 20 is configured to: determine whether the difference between the adjusted flight heights of any two adjacent flight position points is less than or equal to the preset value; and in response to the difference between the adjusted flight heights of any two adjacent flight position points being greater than the preset value, return to the adjusting the planned flight height of each flight position point.

It should be noted that the description of embodiments of the method for adjusting the flight height of the unmanned aerial vehicle is also applicable to the apparatus for adjusting the flight height of the unmanned aerial vehicle according to embodiments of the disclosure, and thus repeated description will be omitted here.

FIG. 19 is a block diagram illustrating an apparatus for controlling a flight of an unmanned aerial vehicle according to embodiments of the disclosure. As illustrated in FIG. 19, an apparatus 200 for controlling a flight of an unmanned aerial vehicle includes an obtaining module 21, an adjustment module 22 and a control module 23.

The obtaining module 21 is configured to obtain a planned flight height of each flight position point for the unmanned aerial vehicle. The adjustment module 22 is configured to adjust the planned flight height of each flight position point until a difference between adjusted flight heights of any two adjacent flight position points is less than or equal to a preset value. The control module 23 is configured to generate an adjusted three-dimensional route based on the adjusted flight heights, and to control the unmanned aerial vehicle to fly based on the adjusted three-dimensional route.

Further, the control module 30 is configured to control the unmanned aerial vehicle to fly at varying altitudes based on the adjusted three-dimensional route.

Further, the control module 30 is configured to: control the unmanned aerial vehicle to fly along flight position points on the adjusted three-dimensional route; detect a distance between a flight height of a next flight position point for the unmanned aerial vehicle and a height of an object at the next flight position point during the flight of the unmanned aerial vehicle; and in response to the distance being less than a preset minimum flight spacing distance, adjust the flight height of the next flight position point to enable the distance to be greater than the preset minimum flight spacing distance.

Further, the control module 30 is configured to: control the unmanned aerial vehicle to fly along flight position points on the adjusted three-dimensional route; detect flight heights of a plurality of flight position points in the adjusted three-dimensional route the unmanned aerial vehicle is about to reach during the flight of the unmanned aerial vehicle; and adjust a flight height of a next flight position point for the unmanned aerial vehicle based on the flight heights of the plurality of flight position points.

It should be noted that the description of embodiments of the method for controlling the flight of the unmanned aerial vehicle is also applicable to the apparatus for controlling the flight of the unmanned aerial vehicle according to embodiments of the disclosure, and thus repeated description will be omitted here.

To implement the above embodiments, the disclosure also provides a computer device. The computer device includes a storage device, a processor, and a computer program stored in the storage device and executable by the processor. When the processor executes the program, the method for adjusting the flight height of the unmanned aerial vehicle as described above is implemented, or the method for controlling the flight of the unmanned aerial vehicle as described above is implemented.

To implement the above embodiments, the disclosure also provides a non-transitory computer-readable storage medium having a computer program stored thereon. When the program is executed by a processor, the method for adjusting the flight height of the unmanned aerial vehicle as described above is implemented, or the method for controlling the flight of the unmanned aerial vehicle as described above is implemented.

To implement the above embodiments, the disclosure also provides a computer program product. When an instruction in the computer program product is executed by a processor, the method for adjusting the flight height of the unmanned aerial vehicle as described above is implemented, or the method for controlling the flight of the unmanned aerial vehicle as described above is implemented.

Reference throughout this specification to "embodiments", "some embodiments", "an example", "a specific example", or "some examples" means that a particular feature, structure, material, or characteristic described in connection with embodiments or example is included in at least one embodiment or example of the disclosure. In this specification, exemplary descriptions of aforesaid terms are not necessarily referring to the same embodiment or example. Furthermore, the particular features, structures, materials, or characteristics may be combined in any suitable manner in one or more embodiments or examples. In addition, without conflicting, various embodiments or examples or features of various embodiments or examples described in the present specification may be combined by those skilled in the art.

In addition, terms such as "first" and "second" are used herein for purposes of description and are not intended to indicate or imply relative importance or significance. Thus, the feature defined with "first" and "second" may comprise one or more this feature. In the description of the disclosure, "a plurality of' means at least two, for example, two or three, unless specified otherwise.

Any process or method described in a flow chart or described herein in other ways may be understood to include one or more modules, segments or portions of codes of executable instructions for achieving specific logical functions or steps in the process, and the scope of a preferred embodiment of the disclosure includes other implementations, which should be understood by those skilled in the art.

The logic and/or step described in other manners herein or shown in the flow chart, for example, a particular sequence table of executable instructions for realizing the logical function, may be specifically achieved in any computer readable medium to be used by the instruction execution system, device or equipment (such as the system based on computers, the system comprising processors or other systems capable of obtaining the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer readable medium comprise but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that each part of the disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

It would be understood by those skilled in the art that all or a part of the steps carried by the method in the above-described embodiments may be completed by relevant hardware instructed by a program. The program may be stored in a computer readable storage medium. When the program is executed, one or a combination of the steps of the method in the above-described embodiments may be completed.

In addition, individual functional units in embodimentss of the disclosure may be integrated in one processing module or may be separately physically present, or two or more units may be integrated in one module. The integrated module as described above may be achieved in the form of hardware, or may be achieved in the form of a software functional module. If the integrated module is achieved in the form of a software functional module and sold or used as a separate product, the integrated module may also be stored in a computer readable storage medium.

The storage medium mentioned above may be read-only memories, magnetic disks or CD, etc. Although explanatory embodiments have been shown and described, it would be appreciated by those skilled in the art that the above embodiments cannot be construed to limit the disclosure, and changes, alternatives, and modifications can be made in embodiments without departing from scope of the disclosure.

## Claims

1. A method for adjusting a flight height of an unmanned aerial vehicle, comprising:
obtaining a planned flight height of each flight position point for the unmanned aerial vehicle; and
adjusting the planned flight height of each flight position point until a difference between adjusted flight heights of any two adjacent flight position points is less than or equal to a preset value.

2. The method of claim 1, wherein adjusting the planned flight height of each flight position point comprises:
obtaining the flight position point, and obtaining an adjacent flight position point of the flight position point within a preset range;
obtaining an altitude difference between the planned flight height of the flight position point and the planned flight height of the adjacent flight position point; and
in response to the altitude difference being greater than a limit height of climbing or descending of the unmanned aerial vehicle, adjusting the planned flight height of the flight position point for the unmanned aerial vehicle or the planned flight height of the adjacent flight position point for the unmanned aerial vehicle.

3. The method of claim 2, wherein obtaining the planned flight height of each flight position point for the unmanned aerial vehicle comprises:
obtaining a two-dimensional route of the unmanned aerial vehicle in a target flight area and flight position points in the two-dimensional route;
obtaining an altitude of an object at each flight position point in the two-dimensional route; and
generating a planned three-dimensional route based on the two-dimensional route and the altitude of the object at each flight position point in the two-dimensional route, the planned flight height of each flight position point in the planned three-dimensional route being the altitude of the object at each flight position point.

4. The method of claim 3, wherein adjusting the planned flight height of the flight position point for the unmanned aerial vehicle or the planned flight height of the adjacent flight position point for the unmanned aerial vehicle comprises:
obtaining the planned flight height of the flight position point and the planned flight height of the adjacent flight position point for the unmanned aerial vehicle; and
recognizing a flight position point with a lower planned flight height from the flight position point and the adjacent flight position point, and adjusting the planned flight height of the flight position point with the lower planned flight height.

5. The method of claim 4, wherein adjusting the planned flight height of the flight position point with the lower planned flight height comprises:
determining whether a difference between the planned flight height of the flight position point and the planned flight height of the adjacent flight position point is greater than the preset value; and
in response to the difference being greater than the preset value, subtracting the preset value from the planned flight height of a flight position point with a higher planned flight height to generate an adjusting height.

6. The method of claim 4 or 5, wherein the adjacent flight position point of the flight position point within the preset range comprises: a first adjacent flight position point previous to or next to the flight position point; and
adjusting the planned flight height of the flight position point comprises:
obtaining the flight position point, and obtaining the first adjacent flight position point previous to or next to the flight position point;
obtaining a first altitude difference between the object at the flight position point and an object at the first adjacent flight position point; and
in response to the first altitude difference being greater than the limit height of climbing or descending of the unmanned aerial vehicle, increasing the planned flight height of a flight position point with a lower planned flight height in the flight position point and the first adjacent flight position point.

7. The method of claim 4 or 5, wherein the adjacent flight position point of the flight position point within the preset range comprises: second adjacent flight position points previous to and next to the flight position point; and
adjusting the planned flight height of the flight position point comprises:
obtaining the flight position point, and obtaining the second adjacent flight position points previous to and next to the flight position point;
obtaining two second altitude differences between the object at the flight position point and respective objects at the second adjacent flight position points; and
in response to the two second altitude differences being greater than the limit height of climbing or descending of the unmanned aerial vehicle, increasing the planned flight height of a flight position point with a lower planned flight height in the flight position point and the second adjacent flight position points.

8. The method of claim 4 or 5, wherein the adjacent flight position point of the flight position point within the preset range comprises: consecutive flight position points; and
adjusting the planned flight height of the flight position point comprises:
obtaining flight position points consecutively, and obtaining planned flight heights of the consecutive flight position points;
determining an overall regularity of the planned flight heights of the consecutive flight position points;
recognizing a flight position point having a planned flight height not in conformity with the regularity from the consecutive flight position points; and
increasing the planned flight height of the flight position point having the planned flight height not in conformity with the regularity.

9. The method of claim 4 or 5, wherein the adjacent flight position point of the flight position point within the preset range comprises: consecutive flight position points; and
adjusting the planned flight height of the flight position point comprises:
obtaining flight position points consecutively, and obtaining planned flight heights of the consecutive flight position points;
obtaining a third altitude difference between an object at any of the flight position points and an object at a corresponding adjacent flight position point;
grouping flight position points having the third altitude difference less than a preset third altitude difference;
obtaining two adjacent groups of flight position points, and determining a fourth altitude difference between a planned flight height of the last flight position point in a previous group of flight position points and a flight position height of the first flight position point in a next group of flight position points; and
in response to the fourth altitude difference being greater than the limit height of climbing or descending of the unmanned aerial vehicle, adjusting the planned flight height of the previous group of flight position points or the next group of flight position points for the unmanned aerial vehicle.

10. The method of claim 2, wherein obtaining the planned flight height of each flight position point for the unmanned aerial vehicle comprises:
obtaining a two-dimensional route of the unmanned aerial vehicle in a target flight area and flight position points in the two-dimensional route;
obtaining an altitude of an object at each flight position point in the two-dimensional route; and
generating a planned three-dimensional route based on the two-dimensional route, the altitude of the object at each flight position point in the two-dimensional route, and a preset safe distance, the planned flight height of each flight position point in the planned three-dimensional route being a sum of the altitude of the object at each flight position point and the preset safe distance.

11. The method of claim 10, wherein adjusting the planned flight height of each flight position point comprises:
obtaining the flight position point, and obtaining an adjacent flight position point of the flight position point within a preset range;
obtaining an altitude difference between the planned flight height of the flight position point and the planned flight height of the adjacent flight position point; and
in response to the altitude difference being greater than a limit height of climbing or descending of the unmanned aerial vehicle, decreasing the planned flight height of a flight position point with a higher planned flight height in the flight position point and the adjacent flight position point, a decreasing height being less than the preset safe distance.

12. The method of claim 11, further comprising:
in response to the planned flight height of the flight position point with the higher planned flight height in the flight position point and the adjacent flight position point being decreased to the altitude of the object at the flight position point with the higher planned flight height, determining an altitude difference between a current planned flight height of the flight position point and a current planned flight height of the adjacent flight position point; and
in response to the altitude difference between the current planned flight height of the flight position point and the current planned flight height of the one adjacent flight position point being greater than the limit height of climbing or descending of the unmanned aerial vehicle, increasing the current planned flight height of a flight position point with a lower current planned flight height in the flight position point and the adjacent flight position point.

13. The method of claim 2 or 10, wherein obtaining the altitude of the object at the flight position point in the two-dimensional route comprises:
obtaining each flight position point in the two-dimensional route and a search area corresponding to each flight position point; and
recognizing a maximum altitude of objects in the search area corresponding to each flight position point, and determining the maximum altitude as the altitude of each flight position point.

14. The method of claim 1, wherein adjusting the planned flight height of each flight position point until the difference between adjusted flight heights of any two adjacent flight position points is less than or equal to the preset value comprises:
determining whether the difference between the adjusted flight heights of any two adjacent flight position points is less than or equal to the preset value; and
in response to the difference between the adjusted flight heights of any two adjacent flight position points being greater than the preset value, returning to the adjusting the planned flight height of each flight position point.

15. An apparatus for adjusting a flight height of an unmanned aerial vehicle, comprising:
an obtaining module, configured to obtain a planned flight height of each flight position point for the unmanned aerial vehicle; and
an adjustment module, configured to adjust the planned flight height of each flight position point until a difference between adjusted flight heights of any two adjacent flight position points is less than or equal to a preset value.

16. A method for controlling a flight of an unmanned aerial vehicle, comprising:
obtaining a planned flight height of each flight position point for the unmanned aerial vehicle;
adjusting the planned flight height of each flight position point until a difference between adjusted flight heights of any two adjacent flight position points is less than or equal to a preset value; and
generating an adjusted three-dimensional route based on the adjusted flight heights, and controlling the unmanned aerial vehicle to fly based on the adjusted three-dimensional route.

17. The method of claim 16, wherein controlling the unmanned aerial vehicle to fly based on the adjusted three-dimensional route comprises:
controlling the unmanned aerial vehicle to fly at varying altitudes based on the adjusted three-dimensional route.

18. The method of claim 17, wherein controlling the unmanned aerial vehicle to fly at varying altitudes based on the adjusted three-dimensional route comprises:
controlling the unmanned aerial vehicle to fly along flight position points on the adjusted three-dimensional route;
detecting a distance between a flight height of a next flight position point for the unmanned aerial vehicle and a height of an object at the next flight position point during the flight of the unmanned aerial vehicle; and
in response to the distance being less than a preset minimum flight spacing distance, adjusting the flight height of the next flight position point to enable the distance to be greater than the preset minimum flight spacing distance.

19. The method of claim 17, wherein controlling the unmanned aerial vehicle to fly at varying altitudes based on the adjusted three-dimensional route comprises:
controlling the unmanned aerial vehicle to fly along flight position points on the adjusted three-dimensional route;
detecting flight heights of a plurality of flight position points in the adjusted three-dimensional route the unmanned aerial vehicle is about to reach during the flight of the unmanned aerial vehicle; and
adjusting a flight height of a next flight position point for the unmanned aerial vehicle based on the flight heights of the plurality of flight position points.

20. An apparatus for controlling a flight of an unmanned aerial vehicle, comprising:
an obtaining module, configured to obtain a planned flight height of each flight position point for the unmanned aerial vehicle;
an adjustment module, configured to adjust the planned flight height of each flight position point until a difference between adjusted flight heights of any two adjacent flight position points is less than or equal to a preset value; and
a control module, configured to generate an adjusted three-dimensional route based on the adjusted flight heights, and to control the unmanned aerial vehicle to fly based on the adjusted three-dimensional route.

21. A computer device, comprising a storage device, a processor, and a computer program stored in the storage device and executable by the processor, wherein when the processor executes the program, the method for adjusting the flight height of the unmanned aerial vehicle of any one of claims 1 to 14 is implemented, or the method for controlling the flight of the unmanned aerial vehicle of any one of claims 16 to 19 is implemented.

22. A non-transitory computer-readable storage medium having a computer program stored thereon, wherein when the program is executed by a processor, the method for adjusting the flight height of the unmanned aerial vehicle of any one of claims 1 to 14 is implemented, or the method for controlling the flight of the unmanned aerial vehicle of any one of claims 16 to 19 is implemented.

23. A computer program product, wherein when an instruction in the computer program product is executed by a processor, the method for adjusting the flight height of the unmanned aerial vehicle of any one of claims 1 to 14 is implemented, or the method for controlling the flight of the unmanned aerial vehicle of any one of claims 16 to 19 is implemented.
